# FASCICULE DE BREVET EUROPEEN

(11) **EP 2 925 541 B1**
(45) Date de publication et mention de la délivrance du brevet: **26.07.2017**
(21) Numéro de dépôt: 13794921.0
(22) Date de dépôt: 22.11.2013
(51) Int. Cl.: B60C 11/03, B60C 11/12

(54) **BANDE DE ROULEMENT DE PNEUMATIQUE A SCULPTURE DIRECTIONNELLE**
REIFENPROFIL MIT AUSGERICHTETEM DESIGN
TYRE TREAD WITH DIRECTIONAL DESIGN

(30) Priorité: 29.11.2012 FR 1261418
(43) Date de publication de la demande: 07.10.2015
(73) Titulaire: Compagnie Générale des Etablissements Michelin, 63000 Clermont-Ferrand (FR)
(72) Inventeur: LEDIEU, Vincent, F-63040 ClermonT-Ferrand Cedex 9 (FR); FRAENKEL, Bertrand, F-63040 ClermonT-Ferrand Cedex 9 (FR); BATNINI, Illyes, F-63040 ClermonT-Ferrand Cedex 9 (FR); VANTAL, Marie-Hélène, F-63040 ClermonT-Ferrand Cedex 9 (FR)
(74) Mandataire: Demaure, Pierre-Yves
(86) Numéro de dépôt international: PCT/EP2013/074431
(87) Numéro de publication internationale: WO 2014/082923

(56) Documents cités:
- EP-A1- 2 230 101
- WO-A1-99/17943
- FR-A1- 2 763 892
- JP-A- S61 160 303
- JP-A- 2005 153 655

## Description

### DOMAINE DE L'INVENTION

La présente invention concerne une bande de roulement pour un pneumatique destiné à équiper un véhicule de tourisme. Plus particulièrement, l'invention concerne un pneumatique présentant des performances améliorées pour des roulages hivernaux ou sur une chaussée humide.

### ETAT DE LA TECHNIQUE

Il est connu du document US4057089 une bande de roulement comportant une sculpture directionnelle. Par « sculpture » d'une bande de roulement, on entend une pluralité de découpures réalisées dans cette bande selon un dessin prédéterminé, ces découpures ayant des largeurs et des profondeurs appropriées. Une découpure désigne de manière générique soit une rainure soit une incision et correspond à l'espace délimité par des parois de matière se faisant face et distantes l'une de l'autre d'une distance non nulle. Ce qui différencie une incision d'une rainure, c'est précisément cette distance ; dans le cas d'une incision, cette distance est appropriée pour permettre la mise en contact au moins partielle des parois opposées délimitant l'incision lors du passage dans le contact avec le sol. Dans le cas d'une rainure, les parois de cette rainure ne peuvent pas venir en contact l'une contre l'autre dans les conditions usuelles de roulage.

La sculpture directionnelle de la bande de roulement du document US4057089 présente ainsi une série de rainures en V pointant toutes dans une même direction tout autour de la bande de roulement du pneumatique. Avec une telle forme de sculpture, on évacue l'eau par les côtés du pneumatique ce qui améliore le drainage de l'aire de contact du pneumatique avec la chaussée humide et en conséquence, améliore l'adhérence de ce pneumatique sur cette chaussée.

Le document EP0721853 divulgue une sculpture directionnelle comportant, outre des rainures en V pointant dans une même direction, une pluralité d'incisions pointant elles aussi dans une direction commune, cette direction commune étant opposée à la direction des rainures. Avec une telle configuration de sculpture, on diminue la rigidité de la sculpture et on améliore les performances d'adhérence du pneumatique sur une chaussée enneigée.

D'autres sculptures directionnelles sont divulguées dans les documents WO-A-9917943 et EP-A-2230101.

Avec l'usure de la bande de roulement, les hauteurs des rainures diminuent ce qui décroît leur capacité à drainer l'eau hors de l'aire de contact. En outre, avec cette usure, la bande de roulement devient globalement plus rigide. Les performances d'adhérence du pneumatique sur une chaussée humide et sur une chaussée enneigée sont alors diminuées avec l'usure de la bande de roulement.

L'invention propose une solution pour limiter ces pertes d'adhérence lors de l'usure du pneumatique.

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « surface de roulement » d'une bande de roulement, on entend ici l'ensemble des points de la bande de roulement qui entrent en contact avec un sol lorsque le pneumatique, gonflé à sa pression de référence, roule sur ce sol. La pression de gonflage de référence est définie dans les conditions d'utilisation du pneumatique, conditions précisées notamment par la norme E.T.R.T.O.

Par « direction axiale », on entend une direction parallèle à l'axe de rotation du pneumatique.

Par « direction radiale », on entend une direction qui est perpendiculaire à l'axe de rotation du pneu (cette direction correspond à la direction de l'épaisseur de la bande de roulement).

Par « direction circonférentielle », on entend une direction qui est tangente à tout cercle centré sur l'axe de rotation. Cette direction est perpendiculaire à la fois à la direction axiale et à la direction radiale.

Par « direction oblique », on entend une direction ayant à la fois une composante circonférentielle et une composante axiale.

Par « taux d'usure » de la bande de roulement, on entend le ratio entre une épaisseur que la bande de roulement a perdu par l'usure et l'épaisseur totale que la bande de roulement peut perdre avant de devoir être remplacée. Ainsi, un taux d'usure de 25% signifie que la bande de roulement a perdu un quart du matériau caoutchoutique à user.

### RESUME DE L'INVENTION

L'invention concerne une bande de roulement comportant une pluralité de rainures formées sur chaque moitié de la bande de roulement de part et d'autre d'un plan médian. Chacune des rainures débouche axialement à l'extérieur et se prolonge axialement vers le plan médian de sorte que la pluralité des rainures forme un premier motif sur la bande de roulement de forme générale en V pointant selon une direction de rainure. La bande de roulement comporte en outre une pluralité d'incisions. A partir d'un certain taux d'usure de la bande de roulement, tout ou partie des incisions de cette bande de roulement s'élargit pour former des cavités, ces cavités s'étendant selon une direction oblique en formant un second motif de forme générale en V pointant selon une direction de cavité. Chacune de ces cavités débouche dans une seule des rainures de la bande de roulement. La pluralité des rainures forme à ce niveau d'usure le même premier motif. La direction des cavités est opposée à la direction des rainures et pour chaque cavité, celle-ci ne débouche pas sur la première paroi de la première rainure mais elle débouche sur la seconde paroi de la seconde rainure.

L'invention propose ainsi de venir générer des cavités prolongeant des incisions, lorsque la bande de roulement atteint un certain niveau usure. Ces cavités forment des arêtes supplémentaires sur la surface de roulement de la bande de roulement qui vont améliorer sa capacité de « grattage » de la neige et donc optimiser l'adhérence de cette bande sur une chaussée enneigée. En outre, ces cavités vont constituer des réservoirs aptes à stocker de l'eau provenant d'une chaussée humide. Comme ces cavités sont reliées à des rainures qui débouchent axialement à l'extérieur, le drainage de l'eau hors de l'aire de contact est également optimisé. En outre, les Demanderesses ont observées qu'une baisse de rigidité des premières parois des rainures pouvait entrainer une diminution non négligeable de la capacité de ces rainures à évacuer l'eau hors de l'aire de contact. Toute ouverture dans une première paroi peut potentiellement entraîner une baisse de rigidité de cette paroi. En ne faisant pas déboucher les cavités sur les premières parois des rainures, on ne vient pas ainsi diminuer la rigidité de ces premières parois des rainures.

La cavité délimite une paroi en vis-à-vis avec la première paroi de la première rainure respectivement avec la seconde paroi de la seconde rainure. La courbure de cette paroi est parallèle à la courbure de la première paroi respectivement de la seconde paroi.

De cette manière, on optimise la longueur des arêtes formées par la cavité sur la surface de roulement et on améliore la capacité de « grattage » de la bande de roulement sur une chaussée enneigée lorsque le pneumatique est dans un état usé.

Dans un mode de réalisation préférentiel, la cavité comprend une partie principale de largeur wp et une partie intermédiaire de largeur inférieure à la largeur de la partie principale, cette partie intermédiaire reliant la partie principale de cavité à une rainure.

En venant créer une réduction de largeur au niveau de la sortie de la cavité, on améliore le débit d'évacuation de l'eau hors de cette cavité.

Dans un mode de réalisation préférentiel, la largeur de la partie intermédiaire de la cavité diminue progressivement de la partie principale de cette cavité vers la rainure.

Du fait de sa largeur réduite, la partie intermédiaire est soumise à des contraintes mécaniques importantes au cours du roulage du pneumatique. En réalisant une partie intermédiaire dont la largeur se réduit progressivement, on améliore globalement la résistance mécanique de la bande de roulement au niveau de cette partie intermédiaire.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement une surface de roulement d'une bande de roulement selon l'invention, à l'état neuf ;
- la **figure 2** représente une vue agrandie d'une partie de la bande de roulement de la **figure 1** à l'état usé;
- la **figure 3** représente une vue partielle d'une surface de roulement selon un troisième mode de réalisation ;
- la **figure 4** représente une vue partielle d'une surface de roulement selon un quatrième mode de réalisation ;

Dans la description qui va suivre, des éléments sensiblement identiques ou similaires seront désignés par des références identiques.

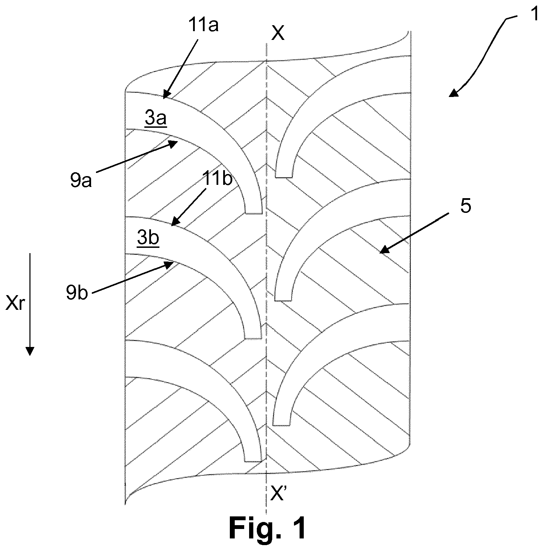

La **figure 1** représente schématiquement une surface de roulement d'une bande de roulement 1 à l'état neuf. C'est cette surface de roulement qui va venir en contact avec une chaussée lors du roulage d'un pneumatique qui comporte cette bande.

De manière plus détaillée, la bande de roulement 1 comprend une pluralité de rainures 3a, 3b formées sur chaque moitié de la bande de roulement de part et d'autre d'un plan médian X-X'. Chacune de ces rainures débouche axialement à l'extérieur, c'est-à-dire en direction des parties épaules du pneumatique (non représentées ici) et se prolongent axialement vers le plan médian X-X' selon une courbure prédéterminée. Ces rainures 3a, 3b forment un premier motif sur la bande de roulement de forme générale en V pointant selon une direction de rainure Xr. Plus particulièrement, chaque rainure délimite une première paroi de matière 9a, 9b intérieure à la courbure de la rainure et une seconde paroi de matière 11a, 11b opposée à la première paroi de matière. La bande de roulement comprend, en outre, une pluralité d'incisions 5. Chacune de ces incisions s'étend ici entre deux rainures adjacentes selon une direction oblique.

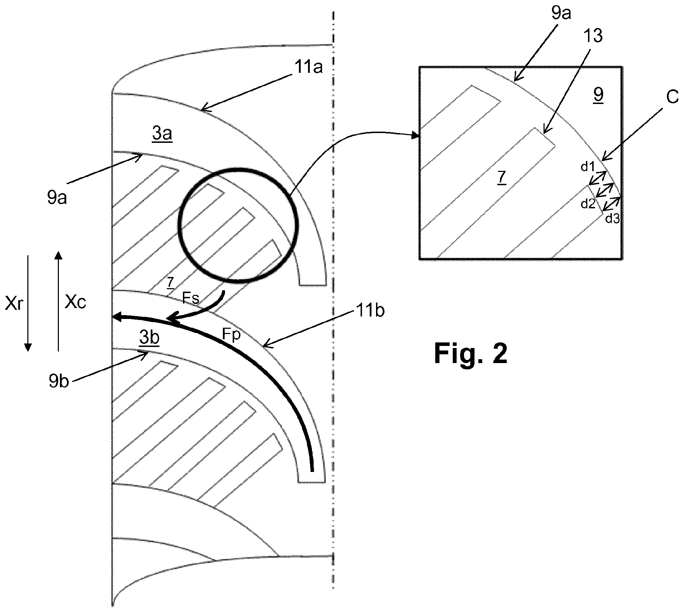

La **figure 2** présente l'état de la bande de roulement 1 lorsque celle-ci atteint un certain taux d'usure, par exemple, lorsque le taux d'usure de la bande de roulement atteint 20%. A ce niveau d'usure, les incisions s'élargissent pour former des cavités 7. Chacune de ces cavités débouche dans une seule des rainures 3a, 3b. Ces cavités 7 forment un second motif sur la surface de la bande de roulement. Ce second motif a une forme générale en V et pointe selon une direction de cavité Xc.

Dans l'exemple de réalisation illustré à la **figure 2**, les cavités 7 pointent selon une direction Xc opposée à la direction Xr des rainures 3a, 3b et chaque cavité s'étend entre la première paroi 9a d'une première rainure 3a et la seconde paroi d'une seconde rainure 3b adjacente à la première rainure 3a. La cavité 7 débouche alors sur la seconde paroi 1 1b de la seconde rainure 3b mais cette cavité ne débouche pas sur la première paroi 9a de la première rainure 3a. Ainsi, un flux d'eau s'évacuant de la cavité 7, dit flux secondaire Fs, va aller dans la même direction qu'un flux d'eau s'évacuant des rainures 3a, 3b, dit flux principal Fp.

La **figure 2** présente un agrandissement au niveau d'une extrémité d'une cavité 7, cette extrémité ne débouchant pas dans une des rainures 3a, 3b. La cavité 7 délimite au niveau de cette extrémité une paroi 13 en vis-à-vis avec la première paroi 9a de la première rainure. Cette paroi présente une forme sur la surface de roulement de la bande de roulement qui est ici parallèle à la courbure C de la première paroi 9a. On notera qu'il est possible de mesurer les distances d1, d2, d3 entre la première paroi 9a et 3 points de la paroi 13, respectivement répartis aux extrémités de la paroi 13 et au centre de cette paroi. Par « parallèle », on entend que si on mesure les différences entre les distances d1, d2, d3, la plus grande de ces différences doit être inférieure à 10% de la distance d1, d2, d3 la plus faible.

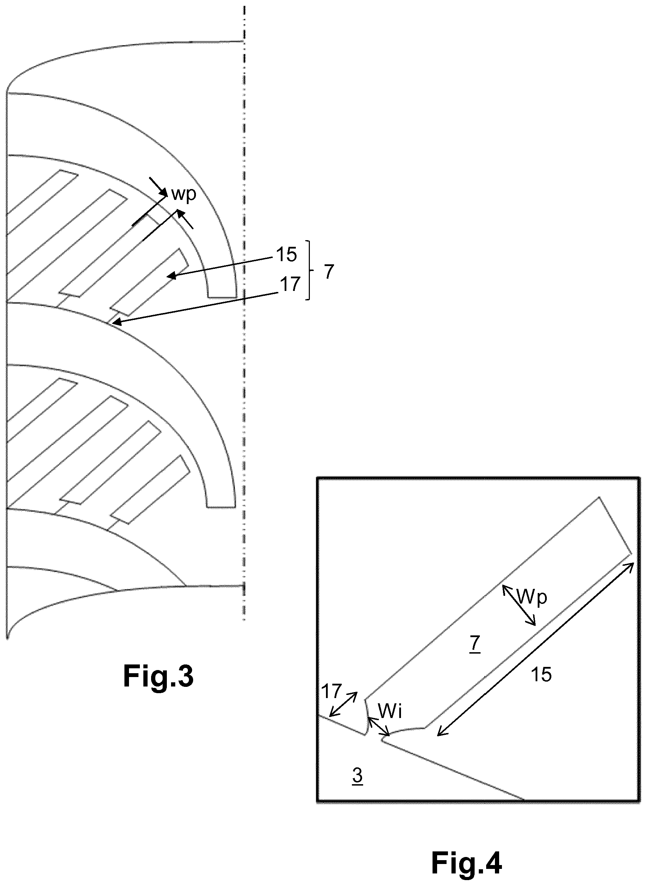

La **figure 3** est une variante de réalisation de la cavité 7 dans laquelle cette cavité comprend une partie principale 15 de largeur wp et une partie intermédiaire 17 reliant la partie principale 15 de cette cavité à une rainure. Cette partie intermédiaire est ici représentée sous la forme d'une incision.

La **figure 4** est une autre variante de réalisation de la cavité 7 dans laquelle la partie intermédiaire diminue progressivement de la partie principale de cette cavité vers la rainure.

L'invention n'est pas limitée aux exemples décrits et représentés et diverses modifications peuvent y être apportées sans sortir de son cadre.

Ainsi, la direction principale d'extension des incisions est, comme il est visible à la **figure 1**, globalement parallèle à la direction d'extension des cavités prolongeant ces incisions, comme cela est visible à **figure 2**. Dans d'autres modes de réalisations, il est possible que la direction principale d'extension des incisions soit angulairement décalée par rapport à la direction principale d'extension des cavités.

En outre, les cavités sont présentées sur les figures avec une forme globalement rectangulaire. En variante, la cavité a dans sa longueur des formes différentes, telles que des formes courbes.

## Revendications

1. Bande de roulement comportant une pluralité de rainures (3a, 3b) formées sur chaque moitié de la bande de roulement de part et d'autre d'un plan médian X-X', chacune de ces rainures débouchant axialement à l'extérieur et se prolongeant axialement vers le plan médian X-X' de sorte que la pluralité des rainures forme un premier motif sur la bande de roulement de forme générale en V pointant selon une direction de rainure Xr, cette bande de roulement comportant une pluralité d'incisions (5) **caractérisée en ce que**, à partir d'un certain taux d'usure de la bande de roulement tout ou partie des incisions de cette bande de roulement s'élargit pour former des cavités (7), ces cavités s'étendant selon une direction oblique en formant un second motif de forme générale en V pointant selon une direction de cavité Xc, chacune de ces cavités (7) débouchant dans une seule des rainures (3a, 3b) de la bande de roulement, la pluralité des rainures (3a, 3b) formant à ce niveau d'usure le même premier motif,
**en ce que** les rainures (3a, 3b) présentent une courbure prédéterminée sur la surface de roulement de la bande de roulement, chaque rainure (3a, 3b) délimitant une première paroi de matière (9a, 9b) intérieure à la courbure et une seconde paroi de matière (11a, 11b) opposée à la première paroi de matière, **en ce que** la direction de cavité Xc est opposée à la direction de rainure Xr, et **en ce que** chaque cavité (7) s'étend entre la première paroi (9a) d'une première rainure (3a) et la seconde paroi (11b) d'une seconde rainure (3b) adjacente à la première rainure, cette cavité ne débouchant pas sur la première paroi (9a) de la première rainure (3a), cette cavité débouchant sur la seconde paroi (11b) de la seconde rainure (3b).

2. Bande de roulement selon l'une des revendications 1, **caractérisée en ce que** la cavité (7) délimite une paroi (13) en vis-à-vis avec la première paroi (9a) de la première rainure (3a) respectivement avec la seconde paroi (11b) de la seconde rainure (3b), la forme de cette paroi (13) sur la surface de roulement étant parallèle à la courbure de la première paroi (9a) respectivement à la courbure de la seconde paroi (11b).

3. Bande de roulement selon l'une des revendications 1 à 2, **caractérisée en ce que** la cavité (7) comprend une partie principale (15) de largeur wp et une partie intermédiaire (17) de largeur wi inférieure à la largeur wp de la partie principale, cette partie intermédiaire reliant la partie principale de la cavité à une rainure (3).

4. Bande de roulement selon la revendication 3, **caractérisée en ce que** la largeur wi de la partie intermédiaire (17) de la cavité (7) diminue progressivement de la partie principale (15) de cette cavité vers la rainure (3).

## Patentansprüche

1. Laufstreifen, der eine Vielzahl von Rillen (3a, 3b) aufweist, die in jeder Hälfte des Laufstreifens zu beiden Seiten einer Mittelebene X-X' geformt sind, wobei jede dieser Rillen axial außen mündet und sich axial zur Mittelebene X-X' verlängert, so dass die Vielzahl von Rillen ein erstes Muster einer allgemeinen Form eines in eine Rillenrichtung Xr weisenden V auf dem Laufstreifen formt, wobei dieser Laufstreifen eine Vielzahl von Einschnitten (5) aufweist, **dadurch gekennzeichnet, dass** ausgehend von einem gewissen Abnutzungsgrad des Laufstreifens alle oder ein Teil der Einschnitte dieses Laufstreifens sich verbreitern, um Hohlräume (7) zu formen, wobei diese Hohlräume sich in einer schrägen Richtung erstrecken, indem sie ein zweites Muster einer allgemeinen Form eines in eine Hohlraumrichtung Xc weisenden V formen, wobei jeder dieser Hohlräume (7) in eine einzige der Rillen (3a, 3b) des Laufstreifens mündet, wobei die Vielzahl der Rillen (3a, 3b) in diesem Abnutzungsbereich das gleiche erste Muster formt, dass die Rillen (3a, 3b) eine vorbestimmte Krümmung an der Lauffläche des Laufstreifens aufweisen, wobei jede Rille (3a, 3b) eine erste Materialwand (9a, 9b) innerhalb der Krümmung und eine zweite Materialwand (11a, 11b) entgegengesetzt zur ersten Materialwand formt, dass die Hohlraumrichtung Xc der Rillenrichtung Xr entgegengesetzt liegt, und dass jeder Hohlraum (7) sich zwischen der ersten Wand (9a) einer ersten Rille (3a) und der zweiten Wand (11b) einer zweiten Rille (3b) erstreckt, die der ersten Rille benachbart ist, wobei dieser Hohlraum nicht an der ersten Wand (9a) der ersten Rille (3a) mündet, wobei dieser Hohlraum an der zweiten Wand (11b) der zweiten Rille (3b) mündet.

2. Laufstreifen nach einem der Ansprüche 1, **dadurch gekennzeichnet, dass** der Hohlraum (7) eine gegenüberliegende Wand (13) mit der ersten Wand (9a) der ersten Rille (3a) bzw. mit der zweiten Wand (11b) der zweiten Rille (3b) definiert, wobei die Form dieser Wand (13) an der Lauffläche parallel zur Krümmung der ersten Wand (9a) bzw. zur Krümmung der zweiten Wand (11b) ist.

3. Laufstreifen nach einem der Ansprüche 1 bis 2, **dadurch gekennzeichnet, dass** der Hohlraum (7) einen Hauptteil (15) einer Breite wp und einen Zwischenteil (17) einer Breite wi kleiner als die Breite wp des Hauptteils aufweist, wobei dieser Zwischenteil den Hauptteil des Hohlraums mit einer Rille (3) verbindet.

4. Laufstreifen nach Anspruch 3, **dadurch gekennzeichnet, dass** die Breite wi des Zwischenteils (17) des Hohlraums (7) progressiv vom Hauptteil (15) dieses Hohlraums zur Rille (3) abnimmt.

## Claims

1. Tread comprising a plurality of grooves (3a, 3b) which are formed on each half of the tread on each side of a midplane X-X', each of these grooves opening axially to the outside and extending axially towards the midplane X-X' so that the plurality of grooves forms on the tread a first pattern in the overall shape of a V pointing in a groove direction Xr, this tread comprising a plurality of sipes (5), **characterized in that** from a certain tread wear onwards, all or some of the sipes of this tread become enlarged in order to form cavities (7), these cavities extending in an oblique direction forming a second pattern in the overall shape of a V pointing in a cavity direction Xc, each of these cavities (7) opening into just one of the grooves (3a, 3b) of the tread, the plurality of grooves (3a, 3b) forming, at this level of wear, the same first pattern, **in that** the grooves (3a, 3b) have a predetermined curvature on the tread surface of the tread, each groove (3a, 3b) delimiting a first wall of material (9a, 9b) on the inside of the curvature and a second wall of material (11a, 11b) opposite the first wall of material, **in that** the cavity direction Xc is opposite to the groove direction Xr and **in that** each cavity (7) extends between the first wall (9a) of a first groove (3a) and the second wall (11b) of a second groove (3b) adjacent to the first groove, this cavity not opening onto the first wall (9a) of the first groove (3a), this cavity opening onto the second wall (11b) of the second groove (3b).

2. Tread according to one of Claim 1, **characterized in that** the cavity (7) delimits a wall (13) respectively facing the first wall (9a) of the first groove (3a) or the second wall (11b) of the second groove (3b), the shape of this wall (13) on the tread surface being parallel respectively to the curvature of the first wall (9a) or parallel to the curvature of the second wall (11b).

3. Tread according to either of Claims 1 and 2, **characterized in that** the cavity (7) comprises a principal part (15) of width wp and an intermediate part (17) of width wi less than the width wp of the principal part, this intermediate part connecting the principal part of the cavity to a groove (3).

4. Tread according to Claim 3, **characterized in that** the width wi of the intermediate part (17) of the cavity (7) decreases progressively from the principal part (15) of this cavity towards the groove (3).
